# EUROPEAN PATENT SPECIFICATION

(11) **EP 4 071 895 B1**
(45) Date of publication and mention of the grant of the patent: **15.07.2026**
(21) Application number: 20896754.7
(22) Date of filing: 26.11.2020
(51) Int. Cl.: H01M 50/105, H01M 50/136, B29C 51/08

(54) **FILM PRODUCTION METHOD, AND BATTERY PRODUCTION METHOD**
FILMHERSTELLUNGSVERFAHREN UND BATTERIEHERSTELLUNGSVERFAHREN
PROCÉDÉ DE PRODUCTION DE FILM ET PROCÉDÉ DE PRODUCTION DE BATTERIE

(30) Priority: 03.12.2019 JP 2019218916
(43) Date of publication of application: 12.10.2022
(73) Proprietor: AESC Japan Ltd., Zama-shi, Kanagawa 252-0012 (JP)
(72) Inventor: OOKA, Aika, Zama-shi, Kanagawa 252-0012 (JP)
(74) Representative: Dennemeyer & Associates S.A.
(86) International application number: PCT/JP2020/043977
(87) International publication number: WO 2021/111969

(56) References cited:
- EP-A1- 3 644 390
- WO-A1-2019/172575
- JP-A- 2018 056 030
- JP-A- 2018 527 719
- JP-A- 2019 186 199
- US-A1- 2016 380 245
- US-A1- 2019 305 260

## Description

### TECHNICAL FIELD

The present invention relates to a method of manufacturing a film, and a method of manufacturing a battery.

### BACKGROUND ART

In recent years, a non-aqueous electrolyte secondary battery, particularly a lithium ion secondary battery, has been developed. The lithium ion secondary battery includes a battery element having a positive electrode, a negative electrode, and a separator. The positive electrode and the negative electrode are separated by the separator. The battery element is wrapped with a film.

Patent Document 1 describes an example of a film. The film is provided with one recessed portion to cover one side of the battery element and the other recessed portion to cover the other side opposite to the one side of the battery element such that the film does not wrinkle when wrapping a large battery element with the film. These two recessed portions are formed by disposing the film between a die and two punches and pushing the two punches into the die. When the two punches are pushed into the die, the film is pinched between a bead and the die in the thickness direction of the film between the two punches.

From WO 2019/172575 A1 there is known a method of manufacturing a film as defined in the preamble of claim 1.

### RELATED DOCUMENT

### PATENT DOCUMENT

[Patent Document 1] Japanese Unexamined Patent Publication No. 2004-71301

### SUMMARY OF THE INVENTION

### TECHNICAL PROBLEM

As described in Patent Document 1, two recessed portions may be formed in the film. For example, in Patent Document 1, as described above, when two recessed portions are formed in the film by pushing two punches into the die through the film, forces are applied to the film from both sides of the film in the thickness direction of the film between the two punches. The inventor, however, has found that this method may affect a fracture resistance of the film.

An example of an object of the present invention is to improve a fracture resistance of a film. Other objects of the present invention may be apparent from the description in the present description.

### SOLUTION TO PROBLEM

An aspect of the present invention is a method of manufacturing a film as defined in claim 1.

Another aspect of the present invention is a method of manufacturing a battery including the method of manufacturing a film according to the above aspect, and folding the film from one of the first accommodation portion and the second accommodation portion to the other, covering one side of a battery element including a positive electrode, a negative electrode, and a separator with the first accommodation portion of the film, and covering the other side of the battery element opposite to the one side with the second accommodation portion of the film.

### ADVANTAGEOUS EFFECTS OF INVENTION

According to the above aspects of the present invention, the fracture resistance of the film can be improved.

### BRIEF DESCRIPTION OF THE DRAWINGS

Fig. 1 is a top view of a battery according to an embodiment.
Fig. 2 is a side view of the battery shown in Fig. 1.
Fig. 3 is a cross-sectional view taken along the line A-A' of Fig. 1.
Fig. 4 is an exploded perspective view of an example of a battery element shown in Figs. 1 to 3.
Fig. 5 is a plan view of an apparatus for manufacturing (processing) a film of the battery described with reference to Figs. 1 to 4.
Fig. 6 is a cross-sectional view taken along the line B-B' of Fig. 5.
Fig. 7 is an enlarged view of a region α surrounded by a broken line in Fig. 6.
Fig. 8 is a diagram for describing an example of a method of wrapping a battery element with the film manufactured (processed) by the apparatus shown by Figs. 5 to 7 (that is, a method of manufacturing a battery).
Fig. 9 is a diagram for describing a method of manufacturing (processing) a film according to a comparative example.
Fig. 10 is a diagram for describing a position where a thickness of the film is measured.

### DESCRIPTION OF EMBODIMENTS

Hereinafter, embodiments of the present invention will be described with reference to the drawings. In all drawings, similar components are designated by the same reference numerals, and description thereof will not be repeated.

In the present specification, ordinal numbers such as "first", "second", "third", and the like are added only for the purpose of distinguishing between configurations with similar names, unless otherwise noted, and do not imply any particular feature (for example, order or importance) of the configuration.

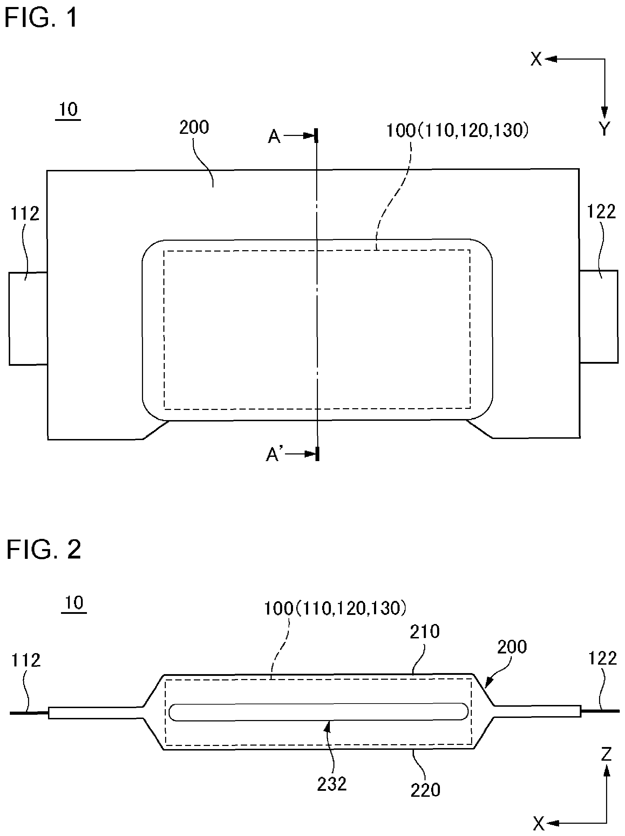

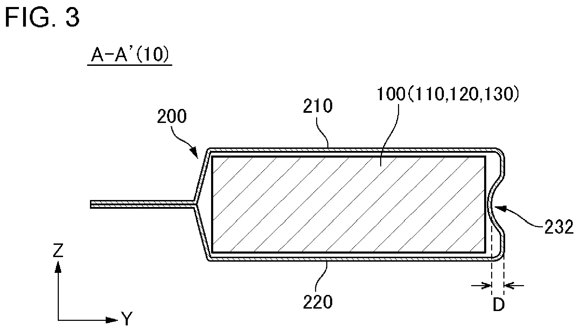

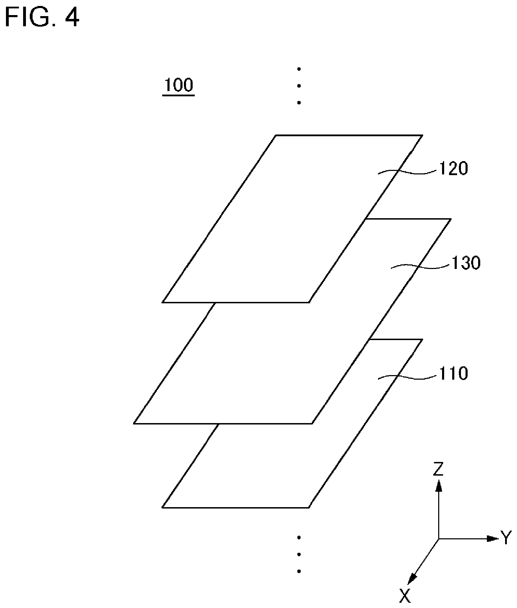

Fig. 1 is a top view of a battery 10 according to the embodiment. Fig. 2 is a side view of the battery 10 shown in Fig. **1****.** Fig. 3 is a cross-sectional view taken along the line A-A' of Fig. 1. Fig. 4 is an exploded perspective view of an example of the battery element 100 shown in Figs. 1 to 3.

In Figs. 1 to 4, the first direction X is the length direction of the battery 10 (battery element 100). The positive direction in the first direction X (direction indicated by the arrow indicating the first direction X) is the direction from a second lead 122 described later to a first lead 112 described later. The negative direction in the first direction X (direction opposite to the direction indicated by the arrow indicating the first direction X) is the direction from the first lead 112 to the second lead 122. The second direction Y is a direction intersecting the first direction X, specifically, a direction orthogonal to the first direction X, and is the width direction of the battery 10 (battery element 100) . The positive direction in the second direction Y (direction indicated by the arrow indicating the second direction Y) is the right direction of the battery 10 when the battery 10 is viewed from the positive direction in the first direction X. The negative direction in the second direction Y (direction opposite to the direction indicated by the arrow indicating the second direction Y) is the left direction of the battery 10 when the battery 10 is viewed from the positive direction in the first direction X. The third direction Z is a direction intersecting both the first direction X and the second direction Y, specifically, a direction orthogonal to both the first direction X and the second direction Y, and is the thickness (height) direction of the battery 10 (battery element 100). The positive direction in the third direction Z (direction indicated by the arrow indicating the third direction Z) is the upward direction of the battery 10. The negative direction in the third direction Z (direction opposite to the direction indicated by the arrow indicating the third direction Z) is the downward direction of the battery 10.

In the present embodiment, the battery 10 is a lithium ion secondary battery. However, the battery 10 may be a battery different from the lithium ion secondary battery.

The outline of the battery 10 will be described with reference to Fig. 3. The battery 10 includes a battery element 100 and a film 200. The battery element 100 includes a positive electrode 110, a negative electrode 120, and a separator 130. The film 200 includes a first accommodation portion 210 and a second accommodation portion 220. The first accommodation portion 210 covers one side of the battery element 100 (positive direction side in the third direction Z). The second accommodation portion 220 covers the other side (negative direction side in the third direction Z) opposite to the one side of the battery element 100. A recessed portion 232 is formed in a portion of the film 200 folded from one of the first accommodation portion 210 and the second accommodation portion 220 to the other. The recessed portion 232 is recessed toward the battery element 100 (toward the negative direction in the second direction Y). The recessed portion 232 extends along one direction (first direction X (for example, Fig. 1 or Fig. 2)) orthogonal to the direction from one side toward the other side (negative direction in the third direction Z) of the battery element 100.

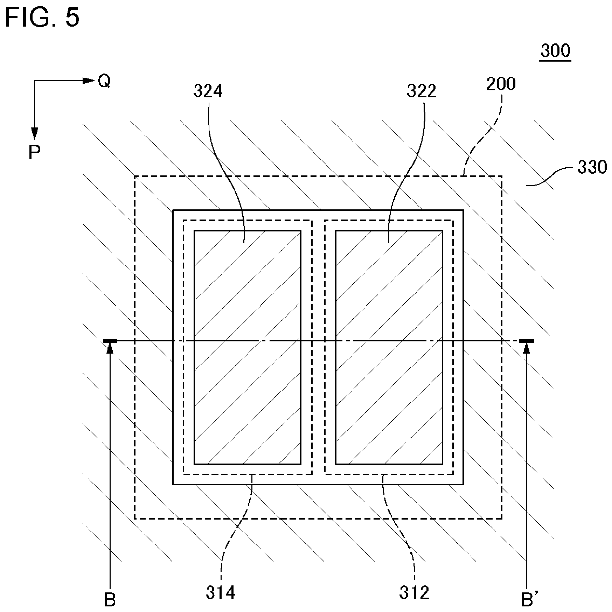

The recessed portion 232 of the film 200 is provided by a method described later with reference to Figs. 5 to 8. As will be described later, the film 200 manufactured by the method described with reference to Figs. 5 to 8 has a high fracture resistance.

The details of the battery 10 will be described with reference to Figs. 1 to 4.

The battery element 100 includes a plurality of positive electrodes 110, a plurality of negative electrodes 120, and a plurality of separators 130. As shown in Fig. 4, in the present embodiment, the plurality of positive electrodes 110 and the plurality of negative electrodes 120 are alternately arranged along the third direction Z such that the separator 130 is disposed between the adjacent positive electrode 110 and the negative electrode 120. That is, the battery element 100 is a lamination having the plurality of positive electrodes 110, the plurality of negative electrodes 120, and the plurality of separators 130 laminated to each other. However, the structure of the battery element 100 is not limited thereto. For example, the separator 130 may be stretched in a zigzag manner to pass between the adjacent positive electrode 110 and the negative electrode 120 while being folded along the second direction Y on the outside of the positive electrode 110 or the negative electrode 120 in the second direction Y. Alternatively, the battery element 100 may have only one positive electrode 110, one negative electrode 120, and only one separator 130. Alternatively, at least one positive electrode 110, at least one negative electrode 120, and at least one separator 130 may be wound.

The positive electrode 110 and the negative electrode 120 are connected to the first lead 112 and the second lead 122, respectively. As shown in Figs. 1 and 2, in the present embodiment, the first lead 112 and the second lead 122 are located on opposite sides in the first direction X. However, the first lead 112 and the second lead 122 may be located on the same side in the first direction X (for example, the positive direction side in the first direction X or the negative direction side in the first direction X).

The film 200 accommodates the battery element 100 together with an electrolytic solution (not shown). That is, the film 200 functions as an exterior material.

The film 200 includes, for example, a heat-sealable resin layer and a barrier layer, and may be, for example, a laminated film including the heat-sealable resin layer and the barrier layer. The resin material forming the heat-sealable resin layer may be, for example, polyethylene (PE), polypropylene, nylon, polyethylene terephthalate (PET) or the like. The barrier layer has a barrier property such as prevention of leakage of electrolytic solution or invasion of moisture from the outside, and may be, for example, a barrier layer made of a metal such as stainless steel (SUS) foil, aluminum foil, aluminum alloy foil, copper foil, and titanium foil.

The film 200 is folded on the right side of the battery element 100 (positive direction side in the second direction Y) from one of the upper surface of the battery element 100 (surface on the positive direction side in the third direction Z) and the lower surface of the battery element 100 (surface on the negative direction side in the third direction Z) to the other. The recessed portion 232 is formed in a portion of the folded portion of the film 200 covering the right side surface (surface on the positive direction side in the second direction Y) of the battery element 100. In the region on the front side (positive direction side in the first direction X) from the front surface (surface on the positive direction side in the first direction X) of the battery element 100, the film 200 is folded such that the film 200 is on both sides of the first lead 112 in the third direction Z. In this region, the crease of the film 200 (end portion of the film 200 on the positive direction side in the second direction Y) projects from the right side surface (surface on the positive direction side in the second direction Y) of the battery element 100 to the right side (positive direction side in the second direction Y). In the region on the rear side (negative direction side in the first direction X) from the rear surface (surface on the negative direction side in the first direction X) of the battery element 100, the film 200 is folded such that the film 200 is on both sides of the second lead 122 in the third direction Z. In this region, the crease of the film 200 (end portion of the film 200 on the positive direction side in the second direction Y) projects from the right side surface (surface on the positive direction side in the second direction Y) of the battery element 100 to the right side (positive direction side in the second direction Y).

In the region on a left side (negative direction side in the second direction Y) from the folded portion of the film 200 (end portion of the film 200 on the positive direction side in the second direction Y), a portion of the film 200 (portion covering the upper surface of the battery element 100 (surface on the positive direction side in the third direction Z) and the surrounding portion) and another portion of the film 200 (portion covering the lower surface of the battery element 100 (surface on the negative direction side in the third direction Z) and the surrounding portion) overlap in the third direction Z. The portion of the film 200 and the another portion of the film 200 are bonded, for example, by welding, except for the portion of the region surrounding the battery element 100 overlapping the first lead 112 or the second lead 122 when viewed from the third direction Z. As a result, the battery element 100 is sealed by the film 200.

As shown in Fig. 3, the recessed portion 232 is convexly curved toward the battery element 100 (toward the negative direction in the second direction Y). A curved shape of the recessed portion 232 is determined by a curved shape of a tip end of a protruding portion 316 described later. The recessed portion 232 has a depth D. The depth D of the recessed portion 232 is the distance in the second direction Y between the portion of the film 200 covering the right side surface of the battery element 100 (surface on the positive direction side in the second direction Y) and projecting most toward the right side of the battery element 100 (positive direction side in the second direction Y) and the portion of the film 200 covering the right side surface of the battery element 100 (surface on the positive direction side in the second direction Y) and most recessed toward the battery element 100 side (negative direction side in the second direction Y).

As shown in Fig. 2, when viewed from the right side of the battery 10 (positive direction side in the second direction Y), the recessed portion 232 extends continuously along the first direction X from one of the front surface (surface on the positive direction side in the first direction X) or the vicinity of the battery element 100 and the rear surface (surface on the negative direction side in the first direction X) or the vicinity of the battery element 100 to the other. The depth D of the recessed portion 232 decreases away from the center of the battery element 100 in the first direction X. This is because the crease of the film 200 (end portion of the film 200 on the positive direction side in the second direction Y) on the front side (positive direction side in the first direction X) and the rear side (negative direction side in the first direction X) of the battery element 100 projects from the right side surface of the battery element 100 (surface on the positive direction side in the second direction Y) toward the right side (positive direction side in the second direction Y), such that the portion of the film 200 covering the right side surface of the battery element 100 (surface on the positive direction side in the second direction Y) is pulled toward the positive direction in the second direction Y.

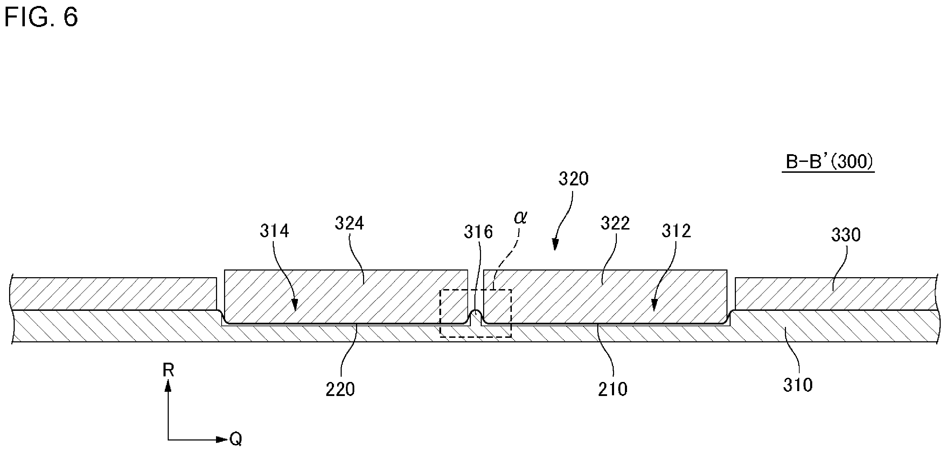

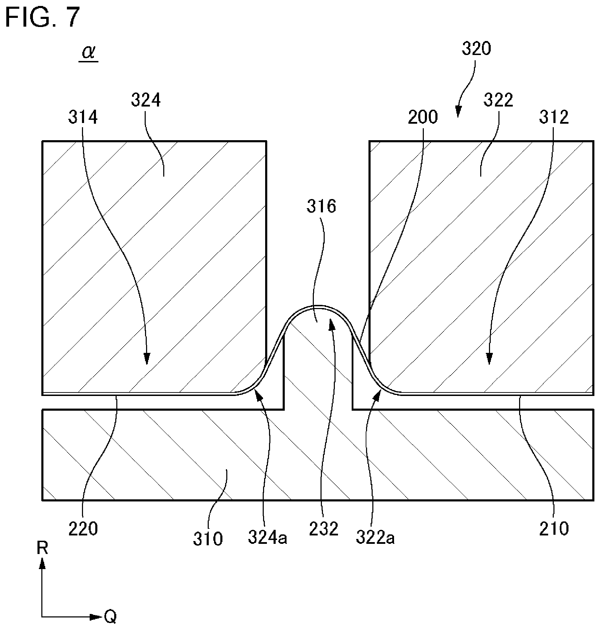

Fig. 5 is a plan view of an apparatus 300 for manufacturing (processing) the film 200 of the battery 10 described with reference to Figs. 1 to 4. Fig. 6 is a cross-sectional view taken along the line B-B' of Fig. 5. Fig. 7 is an enlarged view of a region α surrounded by a broken line in Fig. 6.

In Figs. 5 to 7, the fourth direction P is the length direction of each of a first block 322 and a second block 324 described later. The positive direction in the fourth direction P (direction indicated by the arrow indicating the fourth direction P) is the right direction of each of the first block 322 and the second block 324 when viewed from the negative direction in the fifth direction Q described later. The negative direction in the fourth direction P (direction opposite to the direction indicated by the arrow indicating the fourth direction P) is the left direction of each of the first block 322 and the second block 324 when viewed from the negative direction in the fifth direction Q described later. The fifth direction Q is a direction intersecting the fourth direction P, specifically, a direction orthogonal to the fourth direction P, and is a width direction of each of the first block 322 and the second block 324. The positive direction in the fifth direction Q (direction indicated by the arrow indicating the fifth direction Q) is the direction from the second block 324 toward the first block 322. The negative direction in the fifth direction Q (direction opposite to the direction indicated by the arrow indicating the fifth direction Q) is the direction from the first block 322 toward the second block 324. The sixth direction R is a direction intersecting both the fourth direction P and the fifth direction Q, specifically, a direction orthogonal to both the fourth direction P and the fifth direction Q, and is the thickness (height) direction of the first block 322 and the second block 324. The positive direction in the sixth direction R (direction indicated by the arrow indicating the sixth direction R) is the direction (upward direction) from a first mold 310 to a second mold 320 described later. The negative direction in the sixth direction R (direction opposite to the direction indicated by the arrow indicating the sixth direction R) is the direction (downward direction) from the second mold 320 to the first mold 310.

An outline of an example of a method of manufacturing (processing) the film 200 will be described with reference to Figs. 5 to 7. The film 200 is manufactured using the apparatus 300. The apparatus 300 is provided with the first mold 310 and the second mold 320. The first mold 310 includes a first opening 312, a second opening 314, and a protruding portion 316. The protruding portion 316 is located between the first opening 312 and the second opening 314. The tip end (upper end) of the protruding portion 316 (end on the positive direction side in the sixth direction R) is convexly curved toward the front (upward) (positive direction in the sixth direction R) of the tip end of the protruding portion 316. The second mold 320 includes a first block 322 and a second block 324. The method of manufacturing (processing) the film 200 includes a step of disposing the film 200 between the first mold 310 and the second mold 320, and forming the first accommodation portion 210 (first recessed portion) in the film 200 by inserting the first block 322 of the second mold 320 into the first opening 312 of the first mold 310, and forming the second accommodation portion 220 (second recessed portion) in the film 200 by inserting the second block 324 of the second mold 320 into the second opening 314 of the first mold 310. The step of forming the first accommodation portion 210 and the second accommodation portion 220 includes a step of bringing the film 200 into contact with the tip end of the protruding portion 316 of the first mold 310 without pressing the film 200 from a side opposite to the protruding portion 316 of the first mold 310 (upper side of the protruding portion 316, that is, the positive direction side of the protruding portion 316 in the sixth direction R).

The details of the method of manufacturing (processing) the film 200 will be described with reference to Figs. 5 to 7.

In Figs. 5 to 7, the first mold 310 is a die, and each of the first block 322 and the second block 324 is a punch.

First, the film 200 is disposed on the first mold 310 such that the film overlaps both the first opening 312 and the second opening 314 of the first mold 310.

Next, a portion of the film 200 located around both the first opening 312 and the second opening 314 of the first mold 310 is pressed against the first mold 310 by a third block 330 (for example, stopper) . As a result, the film 200 is fixed to the first mold 310.

Next, the first block 322 and the second block 324 of the second mold 320 are moved from the upper side (positive direction in the sixth direction R) to the lower side (negative direction in the sixth direction R), and are inserted into the first opening 312 and the second opening 314 of the first mold 310, respectively. At this time, the first block 322 moves until the lower surface of the first block 322 (surface on the negative direction side in the sixth direction R) reaches below (negative direction side in the sixth direction R) the upper end of the protruding portion 316 (end on the positive direction side in the sixth direction R). Similarly, the second block 324 moves until the lower surface of the second block 324 (surface on the negative direction side in the sixth direction R) reaches below (negative direction side in the sixth direction R) the upper end of the protruding portion 316 (end on the positive direction side in the sixth direction R). As a result, the first accommodation portion 210 and the second accommodation portion 220 are formed in the film 200 in the region overlapping the first block 322 and the second block 324 in the sixth direction R, respectively. The film 200 is pulled along the curve of the tip end (upper end) of the protruding portion 316 (end on the positive direction side in the sixth direction R) to form the recessed portion 232 in the film 200 between the first block 322 and the second block 324. While the film 200 is pulled along the curve of the tip end (upper end) of the protruding portion 316 (end on the positive direction side in the sixth direction R), the film 200 is not pressed by a pressing member such as a stopper from the side opposite to the protruding portion 316 (upper side of the protruding portion 316, that is, the positive direction side of the protruding portion 316 in the sixth direction R).

If the tip end (upper end) of the protruding portion 316 is not curved and has a corner (for example, if the upper surface of the protruding portion 316 is a flat surface parallel to the fifth direction Q, and a corner is formed between this flat surface of the protruding portion 316 and the side surfaces of the protruding portion 316 on both sides in the fifth direction Q, or if the tip end (upper end) of the protruding portion 316 protrudes in a triangular shape), the force can be locally concentrated on the portion of the film 200 in contact with the corner of the protruding portion 316. In this case, the thickness of the portion of the film 200 may be locally reduced. Accordingly, the fracture resistance of the portion of the film 200 may be locally deteriorated. In the present embodiment, on the other hand, a substantially uniform force is applied to the film 200 along the curve of the tip end (upper end) of the protruding portion 316 (end on the positive direction side in the sixth direction R). Accordingly, it is possible to suppress a decrease in fracture resistance of the portion of the film 200 provided with the recessed portion 232.

If the film 200 is pressed by a pressing member such as a stopper from the side opposite to the protruding portion 316 (upper side of the protruding portion 316, that is, the positive direction side of the protruding portion 316 in the sixth direction R) while the film 200 is pulled along the curve of the tip end (upper end) of the protruding portion 316 (end on the positive direction side in the sixth direction R), the thickness of the portion of the film 200 in contact with both the protruding portion 316 and the pressing member may be locally reduced. Accordingly, the fracture resistance of the portion of the film 200 may be locally deteriorated. In the present embodiment, on the other hand, while the film 200 is pulled along the curve of the tip end (upper end) of the protruding portion 316 (end on the positive direction side in the sixth direction R), the film 200 is not pressed by a pressing member such as a stopper from the side opposite to the protruding portion 316 (upper side of the protruding portion 316, that is, the positive direction side of the protruding portion 316 in the sixth direction R). Accordingly, it is possible to suppress a decrease in fracture resistance of the portion of the film 200 provided with the recessed portion 232.

When viewed from the fourth direction P, the tip end (upper end) of the protruding portion 316 (end on the positive direction side in the sixth direction R) may be curved in an arc shape, for example. In this case, the diameter of the arc may be substantially equal to the width of the protruding portion 316 in the fifth direction Q, and may be, for example, 90% or more and 110% or less of the width of the protruding portion 316 in the fifth direction **Q.** Alternatively, when viewed from the fourth direction P, the tip end (upper end) of the protruding portion 316 (end on the positive direction side in the sixth direction R) may be curved in a parabolic shape.

The first block 322 includes a first curved surface 322a. The first curved surface 322a of the first block 322 is curved from one of the surface of the first block 322 facing (contacting) the film 200 (lower surface of the first block 322, that is, the surface on the negative direction side in the sixth direction R) and the surface of the first block 322 facing the second block 324 (side surface of the first block 322, that is, the surface on the negative direction side in the fifth direction Q) to the other. Accordingly, compared with the case where the angle between the lower surface (surface on the negative direction side in the sixth direction R) and the side surface (surface on the negative direction side in the fifth direction Q) of the first block 322 is, for example, a right angle, a force can be uniformly applied to the film 200 along the curve between the lower surface (surface on the negative direction side in the sixth direction R) and the side surface (surface on the negative direction side in the fifth direction Q) of the first block 322. Thus, it is possible to suppress a decrease in fracture resistance of the portion of the film 200 in contact with the curve between the lower surface (surface on the negative direction side in the sixth direction R) and the side surface (surface on the negative direction side in the fifth direction Q) of the first block 322.

The second block 324 has a second curved surface 324a. The second curved surface 324a of the second block 324 is curved from one of the surface of the second block 324 facing (contacting) the film 200 (lower surface of the second block 324, that is, the surface on the negative direction side in the sixth direction R) and the surface of the second block 324 facing the first block 322 (side surface of the second block 324, that is, the surface on the positive direction side in the fifth direction Q) to the other. Accordingly, compared with the case where the angle between the lower surface (surface on the negative direction side in the sixth direction R) and the side surface (surface on the positive direction side in the fifth direction Q) of the second block 324 is, for example, a right angle, a force can be uniformly applied to the film 200 along the curve between the lower surface (surface on the negative direction side in the sixth direction R) and the side surface (surface on the positive direction side in the fifth direction Q) of the second block 324. Thus, it is possible to suppress a decrease in fracture resistance of the portion of the film 200 in contact with the curve between the lower surface (surface on the negative direction side in the sixth direction R) and the side surface (surface on the positive direction side in the fifth direction Q) of the second block 324.

In the present embodiment, both the first curved surface 322a and the second curved surface 324a are provided. However, only one of the first curved surface 322a and the second curved surface 324a may be provided. Alternatively, the first curved surface 322a and the second curved surface 324a may not be provided.

In the present embodiment, while the first accommodation portion 210 is formed in the film 200, the film 200 is not pressed from the side opposite to the first block 322 (lower side of the first block 322, that is, the negative direction side of the first block 322 in the sixth direction R). That is, while the first accommodation portion 210 is formed in the film 200, the film 200 is not in contact with the surface of the first mold 310 facing the first block 322. However, when the first accommodation portion 210 is formed in the film 200, the film 200 may be pressed from the side opposite to the first block 322 (lower side of the first block 322, that is, the negative direction side of the first block 322 in the sixth direction R). For example, when the first accommodation portion 210 is formed in the film 200, the film 200 may be in contact with the surface of the first mold 310 facing the first block 322. The same applies to the formation of the second accommodation portion 220.

The method of manufacturing (processing) the film 200 is not limited to the examples described with reference to Figs. 5 to 7. For example, the first accommodation portion 210 and the second accommodation portion 220 may be formed by disposing the first mold 310 above the film 200, disposing the second mold 320 below the film 200, and pushing the first block 322 and the second block 324 toward the first mold 310 from lower side to upper side of the film 200. Alternatively, the first accommodation portion 210 and the second accommodation portion 220 may be formed by moving the first mold 310 with respect to the second mold 320 (first block 322 and second block 324) without moving the second mold 320 (first block 322 and second block 324) with respect to the first mold 310.

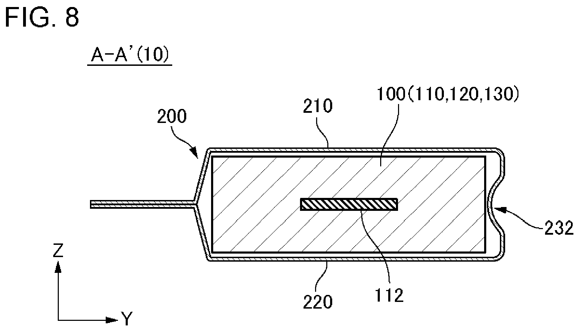

Fig. 8 is a diagram for describing an example of a method of wrapping the battery element 100 with the film 200 manufactured (processed) by the apparatus 300 shown by Figs. 5 to 7 (that is, a method of manufacturing the battery 10).

The second direction Y and the third direction Z in Fig. 8 are the same as the second direction Y and the third direction Z in Figs. 1 to 4, respectively.

As shown in Fig. 8, the film 200 is folded from one of the first accommodation portion 210 and the second accommodation portion 220 to the other. As a result, one side of the battery element 100 (positive direction side in the third direction Z) is covered with the first accommodation portion 210 of the film 200, and the other side of the battery element 100 (negative direction side in the third direction Z) opposite to the one side is covered with the second accommodation portion 220 of the film 200. At this time, the recessed portion 232 formed by the method described with reference to Figs. 5 to 7 remains on the right side surface side (positive direction side in the second direction Y) of the battery element 100. Next, a part of the film 200 and another part of the film 200 overlapping in the third direction Z are bonded to each other, for example, by welding, except for the portion of the region surrounding the battery element 100 overlapping with the first lead 112 or the second lead 122 when viewed from the third direction Z. In this manner, the battery 10 is manufactured.

### EXAMPLES

### (Example)

The film 200 was processed by the method described with reference to Figs. 5 to 7. The conditions for the film 200 were as follows.
Length in fourth direction P: 30 cm
Width in fifth direction Q: 40 cm
Thickness in sixth direction R: 0.15 mm
Material: Aluminum laminated film
The conditions of the apparatus 300 were as follows.
Length of each of the first opening 312 and the second opening 314 in the fourth direction P: 25 cm
Width of each of the first opening 312 and the second opening 314 in the fifth direction Q: 10 cm
Width of protruding portion 316 in fifth direction Q: 0.4 cm
Curve of tip end (upper end) of protruding portion 316: Arc with a radius of curvature of 0.2 cm
Length of each of the first block 322 and the second block 324 in the fourth direction P: 24.8 cm
Width of each of the first block 322 and the second block 324 in the fifth direction Q: 9.8 cm

### (Comparative Example)

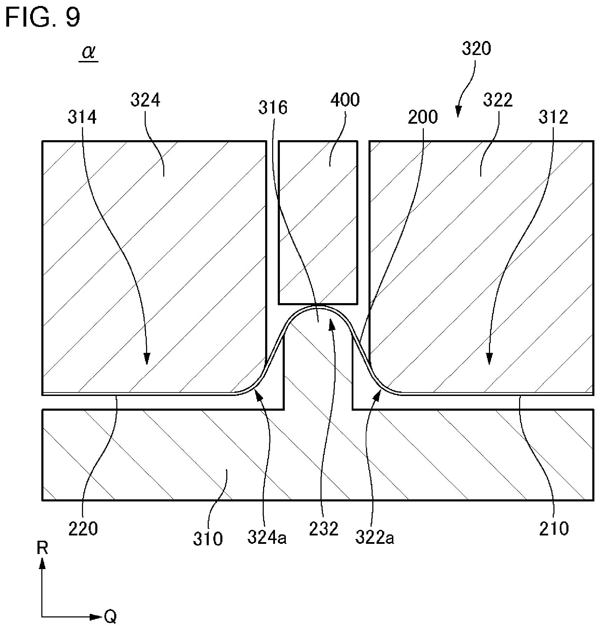

Fig. 9 is a diagram for describing a manufacturing (processing) method of the film 200 according to the comparative example, and corresponds to Fig. 7 of the embodiment. The fifth direction Q and the sixth direction R in Fig. 9 are the same as the fifth direction Q and the sixth direction R in Figs. 5 to 7, respectively. The comparative example is the same as that of the embodiment except that the film 200 is pressed by the stopper 400 from the side opposite to the protruding portion 316 (upper side of the protruding portion 316, that is, the positive direction side of the protruding portion 316 in the sixth direction R), while the film 200 is pulled along the curve of the tip end (upper end) of the protruding portion 316 (end on the positive direction side in the sixth direction R).

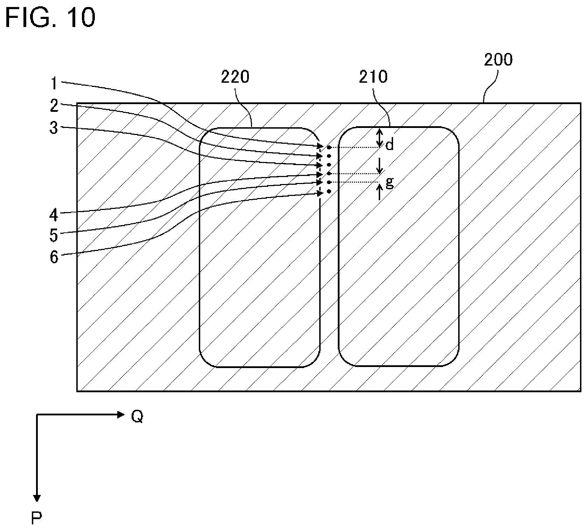

Fig. 10 is a diagram for describing a position where the thickness of the film 200 is measured. The fourth direction P and the fifth direction Q in Fig. 10 are the same as the fourth direction P and the fifth direction Q in Figs. 5 to 7, respectively.

Of the films 200 manufactured (processed) in the example and the comparative example, the thicknesses (thicknesses in the sixth direction R) at six positions from position 1 to position 6 indicated by black circles in Fig. 10 were measured. The positions 1 to 6 are located at the center of the region between the first accommodation portion 210 and the second accommodation portion 220 in the fifth direction Q (that is, center of the region in which the recessed portion 232 is formed in the fifth direction Q). The position 1 is deviated from the side of the first accommodation portion 210 and the second accommodation portion 220 on the negative direction side in the fourth direction P toward the positive direction in the fourth direction P by a distance d (2 cm). The positions 1 to 6 are arranged in this order with equal intervals g (1 cm) from the negative direction to the positive direction in the fourth direction P.

Table 1 shows a summary of the thickness measurement results at each of the positions 1 to 6 (Fig. 10) of the film 200 manufactured (processed) in each of the example and the comparative example.

In Table 1, the rows of "Example" and the columns of "R (%)" show the ratio R of the thickness of the processed film 200 to the thickness of the unprocessed film 200 at each of the positions 1 to 6 (Fig. 10) of the film 200 manufactured (processed) in the example. The rows of "Example" and the column of "Standard Deviation" show the standard deviation of the ratio R from the position 1 to the position 6 in the example. The rows of "Example" and the column of "Average" show the average of the ratio R from the position 1 to the position 6 in the example. The "Example" row and the "Standard Deviation/Average" column show the ratio (coefficient of variation) of the standard deviation to the average of the ratio R from the position 1 to the position 6 in the example.

In Table 1, the rows of "Comparative Example" and the columns of "R (%)" show the ratio R of the thickness of the processed film 200 to the thickness of the unprocessed film 200 at each of the positions 1 to 6 (Fig. 10) of the film 200 manufactured (processed) in the comparative example. At the position 1 of the comparative example, the film 200 was broken and the ratio R could not be measured. The rows of "Comparative Example" and the column of "Standard Deviation" show the standard deviation of the ratio R from the position 2 to the position 6 in the comparative example. The rows of "Comparative Example" and the column of "Average" show the average of the ratio R from the position 2 to the position 6 in the comparative example. The rows of "Comparative Example" and the column of "Standard Deviation/Average" show the ratio (coefficient of variation) of the standard deviation to the average of the ratio R from the position 2 to the position 6 in the comparative example.

**[Table 1]**

| | Position | R (%) | Standard Deviation | Average | Standard Deviation/Average |
|---|---|---|---|---|---|
| Example | 1 | 91 | 0.745 | 90.7 | 0.00822 |
| | 2 | 92 | | | |
| | 3 | 90 | | | |
| | 4 | 90 | | | |
| | 5 | 91 | | | |
| | 6 | 90 | | | |
| Comparative Example | 1 | Broken | - | - | - |
| | 2 | 53 | 13.6 | 68.0 | 0.200 |
| | 3 | 61 | | | |
| | 4 | 61 | | | |
| | 5 | 73 | | | |
| | 6 | 92 | | | |

From the results of each of the example and comparative example in Table 1, the film 200 can have high fracture resistance in a case where the film 200 is not pressed by the stopper 400 from the side opposite to the protruding portion 316 (upper side of the protruding portion 316, that is, the positive direction side of the protruding portion 316 in the sixth direction R) while the film 200 is pulled along the curve of the tip end (upper end) of the protruding portion 316 (end on the positive direction side in the sixth direction R) .

The positions 1 to 6 shown in Fig. 10 are located approximately in the range from the end portion of the battery element 100 in the first direction X to 1/4 of the total length of the battery element 100 in the first direction X, when the film 200 wraps the battery element 100, as viewed from the right side of the battery 10 (positive direction side in the second direction Y). Accordingly, in the present example, in the range from the end portion of the battery element 100 in the first direction X to 1/4 of the total length of the battery element 100 in the first direction X, the ratio of the standard deviation to the average of the thickness of the portion of the film 200 provided with the recessed portion 232 can be 0.0500 or less, such as 0.0250 or less or 0.0100 or less.

This application claims priority based on Japanese Application Japanese Patent Application No. 2019-218916 filed on December 3, 2019.

### REFERENCE SIGNS LIST

10: battery
100: battery element
110: positive electrode
112: first lead
120: negative electrode
122: second lead
130: separator
200: film
210: first accommodation portion
220: second accommodation portion
232: recessed portion
300: apparatus
310: first mold
312: first opening
314: second opening
316: protruding portion
320: second mold
322: first block
322a: first curved surface
324: second block
324a: second curved surface
330: third block
400: stopper

## Claims

1. A method of manufacturing a film (200) comprising:
disposing a film (200) between a first mold (310) having a first opening (312) and a second opening (314) and a second mold (320) having a first block (322) and a second block (324);
pressing a portion of the film (200) located around both the first opening (312) and the second opening (314) of the first mold (310) against the first mold (310) by a third block (330);
forming a first accommodation portion (210) in the film (200) by inserting the first block (322)of the second mold (320) into the first opening (312) of the first mold (310),
forming a second accommodation portion (220) in the film (200) by inserting the second block (324) of the second mold (320) into the second opening (314) of the first mold (310),
forming a recessed portion (232) in the film (200) between the first block (322) and the second block (324), the recessed portion (232) to be recessed toward a battery element (100) and extending along one direction orthogonal to a direction from one side toward the other side of the battery element (100), the battery element (100) includes a positive electrode (110), a negative electrode (120), and a separator (130),
wherein
the first mold (310) includes a protruding portion (316) located between the first opening (312) and the second opening (314), and a tip end of the protruding portion (316) is convexly curved toward a front of the tip end, and
the forming the first accommodation portion (210) and the second accommodation portion (220) includes bringing the film (200) into contact with the tip end of the protruding portion (316) of the first mold (310) without pressing the film (200) from a side opposite to the protruding portion (316) of the first mold (310), **characterized in that**
the first block (322) includes a first curved surface (322a) curved from one of a surface of the first block (322) facing the film (200) and a surface of the first block (322) facing the second block (324) to the other.

2. The method of manufacturing a film (200) according to claim 1, wherein
the second block (324) includes a second curved surface (324a) curved from one of a surface of the second block (324) facing the film (200) and a surface of the second block (324) facing the first block (322) to the other.

3. A method of manufacturing a battery (10) comprising:
the method of manufacturing a film (200) according to claim 1 or 2; and
folding the film (200) from one of the first accommodation portion (210) and the second accommodation portion (220) to the other, covering one side of the battery element with the first accommodation portion (210) of the film (200), and covering the other side of the battery element (100) opposite to the one side with the second accommodation portion (220) of the film(200).

## Patentansprüche

1. Verfahren zur Herstellung einer Folie (200), umfassend:
Anordnen einer Folie (200) zwischen einer ersten Form (310) mit einer ersten Öffnung (312) und einer zweiten Öffnung (314) und einer zweiten Form (320) mit einem ersten Block (322) und einem zweiten Block (324);
Drücken eines Abschnitts der Folie (200), die sich sowohl um die erste Öffnung (312) als auch um die zweite Öffnung (314) der ersten Form (310) herum befindet, gegen die erste Form (310) durch einen dritten Block (330);
Bilden eines ersten Aufnahmeabschnitts (210) in der Folie (200) durch Einsetzen des ersten Blocks (322) der zweiten Form (320) in die erste Öffnung (312) der ersten Form (310),
Bilden eines zweiten Aufnahmeabschnitts (220) in der Folie (200) durch Einsetzen des zweiten Blocks (324) der zweiten Form (320) in die zweite Öffnung (314) der ersten Form (310),
Bilden eines vertieften Abschnitts (232) in der Folie (200) zwischen dem ersten Block (322) und dem zweiten Block (324), wobei der vertiefte Abschnitt (232) in Richtung eines Batterieelements (100) vertieft ist und sich entlang einer Richtung erstreckt, die orthogonal zu einer Richtung von einer Seite zur anderen Seite des Batterieelements (100) verläuft, wobei das Batterieelement (100) eine positive Elektrode (110), eine negative Elektrode (120) und einen Separator (130) einschließt,
wobei
die erste Form (310) einen vorstehenden Abschnitt (316) einschließt, der sich zwischen der ersten Öffnung (312) und der zweiten Öffnung (314) befindet, und ein Spitzenende des vorstehenden Abschnitts (316) in Richtung einer Vorderseite des Spitzenendes konvex gekrümmt ist, und
das Bilden des ersten Aufnahmeabschnitts (210) und des zweiten Aufnahmeabschnitts (220) das Inkontaktbringen der Folie (200) mit dem Spitzenende des vorstehenden Abschnitts (316) der ersten Form (310) einschließt, ohne Drücken der Folie (200) von einer Seite gegenüber dem vorstehenden Abschnitt (316) der ersten Form (310), **dadurch gekennzeichnet, dass**
der erste Block (322) eine erste gekrümmte Oberfläche (322a) einschließt, die von einer der der Folie (200) zugewandten Oberfläche des ersten Blocks (322) und einer dem zweiten Block (324) zugewandten Oberfläche des ersten Blocks (322) zu der anderen gekrümmt ist.

2. Verfahren zur Herstellung einer Folie (200) nach Anspruch 1, wobei
der zweite Block (324) eine zweite gekrümmte Oberfläche (324a) einschließt, die von einer der der Folie (200) zugewandten Oberfläche des zweiten Blocks (324) und einer dem ersten Block (322) zugewandten Oberfläche des zweiten Blocks (324) zu der anderen gekrümmt ist.

3. Verfahren zur Herstellung einer Batterie (10), umfassend:
das Verfahren zur Herstellung einer Folie (200) nach Anspruch 1 oder 2; und
Falten der Folie (200) von einem des ersten Aufnahmeabschnitts (210) und des zweiten Aufnahmeabschnitts (220) zu dem anderen, Abdecken einer Seite des Batterieelements mit dem ersten Aufnahmeabschnitt (210) der Folie (200), und Abdecken der anderen Seite des Batterieelements (100) gegenüber der einen Seite mit dem zweiten Aufnahmeabschnitt (220) der Folie (200).

## Revendications

1. Procédé de fabrication d'un film (200) comprenant :
la mise en place d'un film (200) entre un premier moule (310) ayant une première ouverture (312) et une deuxième ouverture (314) et un deuxième moule (320) ayant un premier bloc (322) et un deuxième bloc (324) ;
le pressage d'une partie du film (200) située à la fois autour de la première ouverture (312) et de la deuxième ouverture (314) du premier moule (310) contre le premier moule (310) par un troisième bloc (330) ;
la formation d'une première partie de réception (210) dans le film (200) en insérant le premier bloc (322) du deuxième moule (320) dans la première ouverture (312) du premier moule (310),
la formation d'une deuxième partie de réception (220) dans le film (200) en insérant le deuxième bloc (324) du deuxième moule (320) dans la deuxième ouverture (314) du premier moule (310),
la formation d'une partie évidée (232) dans le film (200) entre le premier bloc (322) et le deuxième bloc (324), la partie évidée (232) devant être évidée vers un élément de batterie (100) et s'étendant le long d'une direction orthogonale à une direction allant d'un côté vers l'autre côté de l'élément de batterie (100), l'élément de batterie (100) inclut une électrode positive (110), une électrode négative (120) et un séparateur (130),
dans lequel
le premier moule (310) inclut une partie saillante (316) située entre la première ouverture (312) et la deuxième ouverture (314), et une extrémité de la partie saillante (316) est incurvée de manière convexe vers un avant de l'extrémité, et
la formation de la première partie de réception (210) et de la deuxième partie de réception (220) inclut la mise en contact du film (200) avec l'extrémité de la partie saillante (316) du premier moule (310) sans pressage du film (200) depuis un côté opposé à la partie saillante (316) du premier moule (310), **caractérisé en ce que**
le premier bloc (322) inclut une première surface incurvée (322a) incurvée d'une parmi une surface du premier bloc (322) faisant face au film (200) et une surface du premier bloc (322) faisant face au deuxième bloc (324) à l'autre.

2. Procédé de fabrication d'un film (200) selon la revendication 1, dans lequel
le deuxième bloc (324) inclut une deuxième surface incurvée (324a) incurvée d'une parmi une surface du deuxième bloc (324) faisant face au film (200) et une surface du deuxième bloc (324) faisant face au deuxième bloc (322) à l'autre.

3. Procédé de fabrication d'une batterie (10) comprenant :
le procédé de fabrication d'un film (200) selon la revendication 1 ou 2 ; et
le pliage du film (200) d'une parmi la première partie de réception (210) et la deuxième partie de réception (220) à l'autre, le recouvrement d'un côté de l'élément de batterie avec la première partie de réception (210) du film (200) et le recouvrement de l'autre côté de l'élément de batterie (100) opposé au un côté avec la deuxième partie de réception (220) du film (200).
